Europäisches Patentamt

European Patent Office

Office européen des brevets

(19)

(11) **EP 1 067 665 A1**

(12) **DEMANDE DE BREVET EUROPEEN**

(43) Date de publication:
**10.01.2001 Bulletin 2001/02**

(51) Int Cl.⁷: **H02M 3/335**

(21) Numéro de dépôt: **99460047.6**

(22) Date de dépôt: **07.07.1999**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **TRT Lucent Technologies (SA)
75008 Paris (FR)**

(72) Inventeur: **Libert, Louis
91620 Nozay (FR)**

(74) Mandataire: **Ballot, Paul
Cabinet Ballot-Schmit,
4 Rue Général Hoche
56100 Lorient (FR)**

(54) **Régulateur à découpage**

(57)    La présente invention concerne un régulateur de tension à découpage du type convertisseur direct. Il comporte un transformateur (T) constitué d'un enroulement primaire (Le) aux bornés duquel est appliquée une tension d'entrée (Ve) continue et d'un enroulement secondaire (Ls1), un interrupteur (S) monté en série avec ledit enroulement primaire pour découper ladite tension d'entrée (Ve), un bloc principal (D1,D2,Lp,Cp) connecté entre les bornes de l'enroulement secondaire (Ls1) pour produire une tension principale (Vp), et un bloc auxiliaire (D3,D4,La,Ca) pour produire une tension auxiliaire (Va) supérieure à la tension principale (Vp) et de même polarité. Selon l'invention, le bloc auxiliaire (D3,D4,La,Ca) est connecté entre les bornes de l'enroulement secondaire (Ls1) du transformateur et fonctionne en permanence selon un mode de restitution totale, mode dans lequel le bloc restitue, pendant une phase d'ouverture dudit interrupteur (S), toute l'énergie accumulée pendant la phase précédente de fermeture dudit interrupteur (S).

FIG.3

Printed by Jouve, 75001 PARIS (FR)

**Description**

La présente invention concerne un régulateur à découpage de type convertisseur direct, destiné à produire une tension principale continue et une tension continue auxiliaire d'amplitude supérieure et de même polarité.

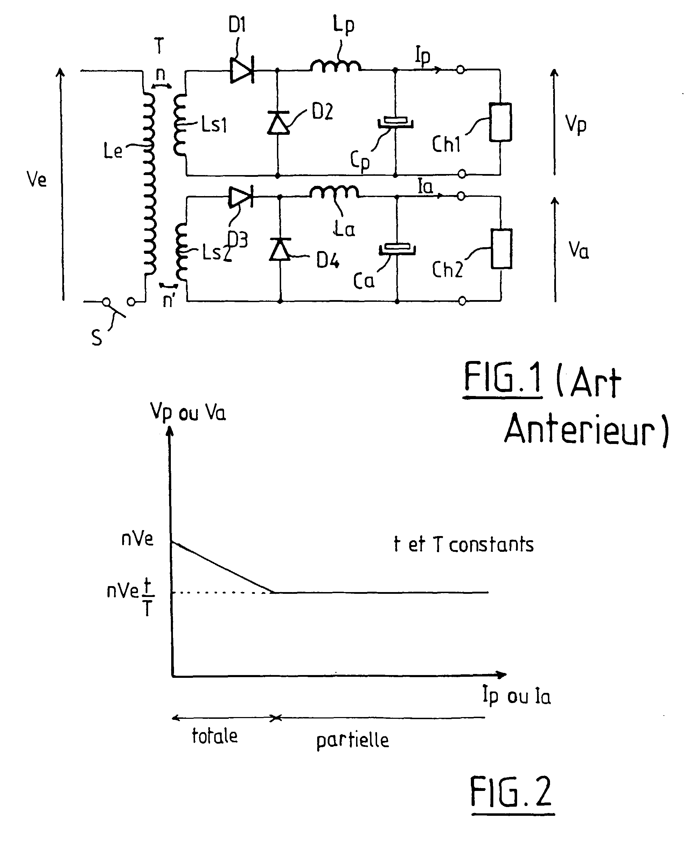

Classiquement, un convertisseur direct ou "forward" produit une tension de sortie Vs continue à partir d'une tension d'entrée Ve redressée de plus faible amplitude. Il peut également être conçu pour produire une tension principale Vp et une tension auxiliaire Va. On parle de régulateur à découpage car la tension d'entrée Ve est découpée dans le temps. Un tel convertisseur est représenté à la figure 1. Il comporte en entrée un transformateur T constitué d'un enroulement primaire Le et deux enroulements secondaires, Ls1 et Ls2. Un interrupteur S est placé en série avec l'enroulement primaire Le du transformateur pour découper la tension d'entrée Ve. Un bloc principal est connecté aux bornes de l'enroulement secondaire Ls1 pour produire la tension principale Vp et un bloc auxiliaire est connecté aux bornes de l'enroulement secondaire Ls2 pour produire la tension auxiliaire Va. On désigne par n le rapport de transformation entre l'enroulement primaire et l'enroulement secondaire Ls1 et par n' le rapport de transformation entre l'enroulement primaire et l'enroulement secondaire Ls2. La tension principale Vp issue du bloc principal est appliquée aux bornes d'une charge Ch1 et la tension auxiliaire Va issue du bloc auxiliaire aux bornes d'une charge Ch2. Le bloc principal comporte une diode D1 et une bobine d'inductance Lp montées en série entre une première borne de l'enroulement secondaire Lsl et une première borne de la charge Ch1. La deuxième borne de l'enroulement secondaire Ls1 est connectée à la deuxième borne de la charge Ch1. L'anode de la diode D1 est connectée à la première borne de l'enroulement secondaire Ls1 et sa cathode est reliée à la bobine Lp. Ce bloc comporte également un condensateur de lissage Cp monté en parallèle avec la charge Ch1 et une seconde diode D2 dont l'anode est connectée à la seconde borne de l'enroulement secondaire Ls1 et la cathode est connectée à la cathode de la diode D1. La tension de sortie Vp est obtenue aux bornes du condensateur Cp. La structure du bloc auxiliaire est identique à celle du bloc principal. Ce bloc auxiliaire comportent respectivement deux diodes, D3 et D4, une bobine La et un condensateur en lieu et place des éléments D1, D2, Lp et Cp du bloc principal. Enfin, une charge Ch2 est connectée aux bornes de sortie du bloc auxiliaire.

Nous rappelons le principe fonctionnement d'un tel circuit : lorsque l'interrupteur S est fermé, une tension apparaît aux bornes des enroulements secondaires Ls1 et Ls2. Compte tenu de la disposition des diodes D1 et D2, un courant Ip s'établit dans le circuit constitué de la diode D1, de la bobine Lp et de la charge Ch1. La bobine Lp stocke alors de l'énergie. On parle de convertisseur car il y a transformation d'énergie électrique en énergie magnétique. De même, un courant Ia s'établit dans le circuit constitué de la diode D3, de la bobine La et de la charge Ch2. D'autre part, pendant la période d'ouverture de l'interrupteur S, l'énergie stockée dans la bobine Lp s'écoule vers la charge Ch1 à travers la diode D2 et l'énergie stockée dans la bobine La s'écoule dans la charge Ch2. Les condensateurs Cp et Ca servent à filtrer l'ondulation due au découpage et jouent le rôle de réservoir d'énergie.

Ce principe étant défini, chaque bloc peut fonctionner selon deux modes : soit en restitution totale, soit en restitution partielle. En restitution totale, la bobine restitue pendant la période de fermeture de l'interrupteur toute l'énergie emmagasinée pendant la période d'ouverture. La tension de sortie est alors égale à : pour le bloc principal

$$Vp = \frac{n^2 Ve^2 t^2}{2Lp\, Ip\, T + nVet^2} \qquad (1)$$

et pour le bloc auxiliaire

$$Va = \frac{n^2 Ve^2 t^2}{2La\, Ia\, T + nVet^2} \qquad (2)$$

où t et T désignent respectivement le temps de conduction et la de période de découpage de l'interrupteur S ;
Ip est la valeur moyenne du courant de sortie du bloc principal ; et
Ia est la valeur moyenne du courant de sortie du bloc auxiliaire.

En restitution partielle, la bobine ne restitue qu'une partie de l'énergie et la tension de sortie vaut alors :

$$Vp = n\, Ve\, \frac{t}{T} \qquad (3)$$

et

$$Va = nVe\, \frac{t}{T} \qquad (4)$$

Ces deux modes de fonctionnement sont illustrés à la figure 2 par la courbe Vp ou Va = f(Ip ou Ia). Cette courbe est réalisée pour un temps t et une période de découpage T constants. Pour les faibles valeurs de courant de sortie Ip (ou Ia) du bloc, le bloc fonctionne en mode de restitution totale et Vp (ou Va) varie entre nVe et $nVe\frac{t}{T}$. Pour des valeurs Ip (ou Ia) plus élevées, le bloc fonctionne en mode de restitution partielle et Vp (ou Va) est égal à $nVe\frac{t}{T}$.

Pour produire une tension auxiliaire Va supérieure à la tension principale Vp, on prend classiquement un enroulement secondaire Ls2 ayant un nombre de spires plus élevé que l'enroulement secondaire Lsl de manière à ce que le rapport de transformation n' soit supérieure à n.

En pratique, ce transformateur à deux enroulements secondaires est fabriqué à partir d'un transformateur classique auquel on rajoute un deuxième enroulement secondaire autour de l'enroulement primaire. On peut également utiliser les imperfections de ce transformateur comme deuxième enroulement secondaire.

Cette manière de réaliser le transformateur à deux enroulements secondaires pose cependant un problème lorsque le transformateur est réalisé dans une technologie intégrée, par exemple avec une technique CMS. Il est alors impossible de rajouter un enroulement supplémentaire autour de l'enroulement primaire ou d'utiliser les imperfections du transformateur comme enroulement supplémentaire puisque les points d'accès au transformateur se limitent aux bornes de l'enroulement primaire et de l'enroulement secondaire.

Aussi, un but de l'invention est de proposer un régulateur de tension à découpage, de type convertisseur direct, apte à produire une tension principale continue Vp et une tension auxiliaire Va supérieure à la tension principale et de même polarité, et ne comprenant pas d'enroulement secondaire supplémentaire.

L'invention a donc pour objet un régulateur de tension à découpage du type convertisseur direct comportant un transformateur comprenant un enroulement primaire aux bornes duquel est appliquée une tension d'entrée continue et un enroulement secondaire, un interrupteur monté en série avec ledit enroulement primaire pour découper ladite tension d'entrée, un bloc principal connecté entre les bornes dudit enroulement secondaire pour produire une tension principale, et un bloc auxiliaire pour produire une tension auxiliaire supérieure à la tension principale et de même polarité, caractérisé en ce que ledit bloc auxiliaire est connecté entre les bornes de l'enroulement secondaire du transformateur, ledit bloc auxiliaire fonctionnant en permanence selon un mode dans lequel il restitue, pendant la phase d'ouverture dudit interrupteur, toute l'énergie accumulée pendant la phase précédente de fermeture dudit interrupteur.

D'autres caractéristiques et avantages de l'invention apparaîtront à la lecture de description détaillée qui suit et qui est faite en référence aux dessins annexés, parmi lesquels :

- la figure 1, déjà décrite, est un schéma électrique d'un régulateur de tension à découpage de l'art antérieur capable de produire une tension principale Vp et une tension auxiliaire Va>Vp et comprenant deux enroulements secondaires ;
- la figure 2, déjà décrite, représente une courbe Vp ou Va = f(Ip ou Ia) ; et
- la figure 3 est un schéma électrique d'un régulateur de tension à découpage selon l'invention.

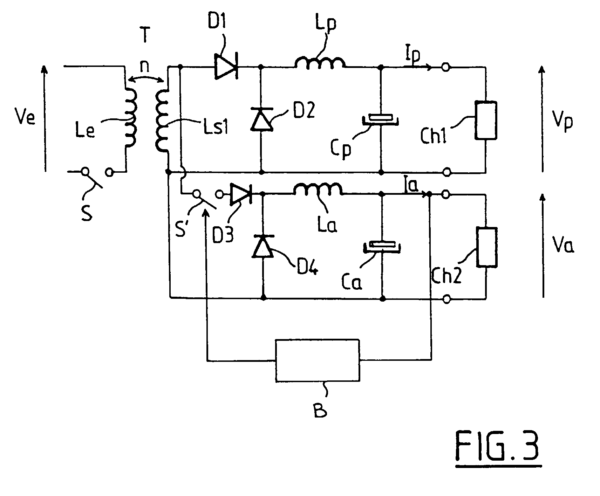

Selon l'invention, on cherche à produire une tension auxiliaire Va supérieure à la tension principale Vp issue du bloc principal sans ajouter d'enroulement secondaire supplémentaire. Pour ce faire, on connecte le bloc auxiliaire aux bornes de l'enroulement secondaire Lsl du transformateur T et on s'arrange pour que ce bloc auxiliaire fonctionne toujours en mode restitution totale. Une forme de réalisation préférée du régulateur à découpage selon l'invention est représentée à la figure 3.

On dispose, pour les deux blocs, des mêmes valeurs de temps de conduction t et de période de découpage T de l'interrupteur, de tension d'entrée Ve et de rapport de transformation n. Par ailleurs, on considère un courant moyen de sortie Ia du bloc auxiliaire de valeur relativement faible de manière à ce que le bloc fonctionne en permanence en restitution totale.

Pour s'assurer que Va sera toujours supérieure à Vp, on calcule la valeur d'inductance $La_{max}$ obtenue lorsque Va = $Va_{min}$ avec $Va_{min}$, > Vp. $La_{max}$ est obtenue pour Ia = $Ia_{max}$ et Ip = $Ip_{min}$. En effet, le bloc auxiliaire fonctionnant en mode restitution totale, $Va_{min}$ est obtenue pour Ia = $Ia_{max}$. De plus, lorsque Ip = $Ip_{min}$, le temps de conduction t de l'interrupteur S est minimale ce qui limite le temps de magnétisation de la bobine La et de ce fait la tension auxiliaire Va.

Deux cas sont à envisager :

(a) le bloc principal fonctionne en restitution partielle de (3), on tire

$$t = \frac{VpT}{nVe}$$

d'où, pour toute valeur $Va_{min}$, > Vp, on a

$$Va_{min} = \frac{(nVe)^2 \dfrac{Vp^2 T^2}{(nVe)^2}}{2La_{max}\, Ia_{max}\, T + nVe \left( \dfrac{Vp\, T}{nVe} \right)^2}$$

d'où

$$Va_{min} = \frac{VP^2\, T}{2La_{max}\, Ia_{max} + \dfrac{Vp^2 T}{nVe}}$$

d'où

$$La_{max} = \frac{Vp^2\, T\, (nVe - Va_{min})}{2n\, Ia_{max}\, Va_{min}\, Ve}$$

(b) le bloc principal fonctionne en restitution totale selon (1) on a

$$Vp_{max} = \frac{(nVet)^2}{2Lp \ Ip_{min} \ T + nVet^2}$$

selon (2) on a

$$Va_{min} = \frac{(nVet)^2}{2La_{max} \ Ia_{max} \ T + nVet^2}$$

avec $Va_{min} > Vp_{max}$ d'où

$$La_{max} = \frac{2Vp_{max} \ Ip_{min} \ Lp \ T - nVet^2(Va_{min} - Vp_{max})}{2Va_{min} \ Ia_{max} \ T}$$

On obtient ainsi deux valeurs d'inductance maximales $La_{max}$ correspondant chacune à un mode de fonctionnement du bloc principal; ainsi, pour toute valeur $La < La_{max}$, on a $Va > Va_{min} > Vp$.

Si le bloc principal fonctionne sélectivement en mode restitution totale et en mode restitution partielle, la valeur de $La_{max}$ à prendre en compte est la valeur minimale de ces deux valeurs.

Ce régulateur permet d'obtenir une tension auxiliaire Va supérieure à la tension Vp. Cette tension Va n'est pas nécessairement constante, c'est pourquoi on rajoute de préférence un interrupteur auxiliaire S' pour découper la tension provenant de l'enroulement secondaire. Ainsi, le temps de magnétisation t' de la bobine d'inductance La est à alors inférieure au temps de conduction t de l'interrupteur S. Dans la figure 3, cet interrupteur est placé entre la première borne de l'enroulement secondaire Ls1 et l'anode de la diode D3. Son ouverture est commandée par un bloc de commande B.

## Revendications

1. Régulateur de tension à découpage du type convertisseur direct comportant un transformateur (T) comprenant un enroulement primaire (Le) aux bornes duquel est appliquée une tension d'entrée (Ve) continue et un enroulement secondaire (Ls1), un interrupteur (S) monté en série avec ledit enroulement primaire pour découper ladite tension d'entrée (Ve), un bloc principal (D1,D2,Lp,Cp) connecté entre les bornes dudit enroulement secondaire (Ls1) pour produire une tension principale (Vp), et un bloc auxiliaire (D3,D4,La,Ca) pour produire une tension auxiliaire (Va) supérieure à la tension principale (Vp) et de même polarité, caractérisé en ce que ledit bloc auxiliaire (D3,D4,La,Ca) est connecté entre les bornes de l'enroulement secondaire (Ls1) du transformateur, ledit bloc auxiliaire (D3,D4,La,Ca) fonctionnant en permanence selon un mode de restitution totale, mode dans lequel le bloc restitue, pendant une phase d'ouverture dudit interrupteur (S), toute l'énergie accumulée pendant la phase précédente de fermeture dudit interrupteur (S).

2. Régulateur selon la revendication 1, caractérisé en ce que, le bloc auxiliaire comporte une bobine (La) dont la valeur d'inductance est choisie de manière à ce que la tension auxiliaire (Va) soit supérieure à la tension principale.

3. Régulateur selon la revendication 2, caractérisé en ce que le bloc auxiliaire comporte en outre un interrupteur (S') pour rendre constante la tension auxiliaire (Va).

# FIG.1 (Art Antérieur)

# FIG.2

FIG.3

**Office européen des brevets**

**RAPPORT DE RECHERCHE EUROPEENNE**

Numéro de la demande

EP 99 46 0047

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 41 18 918 A (PHILIPS PATENTVERWALTUNG) 10 décembre 1992 (1992-12-10) * abrégé * * colonne 2, ligne 65 - colonne 4, ligne 51 * * figure 1 * | 1 | H02M3/335 |
| A | DE 197 11 817 A (ABB DAIMLER BENZ TRANSPORTATION) 24 septembre 1998 (1998-09-24) * abrégé * * colonne 4, ligne 44 - colonne 5, ligne 22 * * figure 4 * | 1 | |
| A | DE 298 08 082 U (MGV MARGRET GRUBER VERTRIEB GMBH) 9 juillet 1998 (1998-07-09) * page 5, ligne 7 - ligne 35 * * figure 2 * | 1 | |
| A | EP 0 164 144 A (HASLER AG) 11 décembre 1985 (1985-12-11) * abrégé * * figures 3,4 * | 1 | **DOMAINES TECHNIQUES RECHERCHES (Int.Cl.7)** H02M |
| A | US 5 170 333 A (MASAKI NIWAYAMA) 8 décembre 1992 (1992-12-08) * abrégé * * figures 3,5,7 * * colonne 1, ligne 52 - ligne 63 * * colonne 6, ligne 18 - ligne 35 * | 1 | |

Le présent rapport a été établi pour toutes les revendications

| Lieu de la recherche | Date d'achèvement de la recherche | Examinateur |
|---|---|---|
| LA HAYE | 15 décembre 1999 | Lund, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**          EP 99 46 0047

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-12-1999

| Document brevet cité au rapport de recherche | | Date de publication | Membre(s) de la famille de brevet(s) | | Date de publication |
|---|---|---|---|---|---|
| DE 4118918 | A | 10-12-1992 | AUCUN | | |
| DE 19711817 | A | 24-09-1998 | AUCUN | | |
| DE 29808082 | U | 09-07-1998 | AUCUN | | |
| EP 164144 | A | 11-12-1985 | DE | 3563501 A | 28-07-1988 |
| US 5170333 | A | 08-12-1992 | JP | 4175908 A | 23-06-1992 |
| | | | DE | 4136809 A | 14-05-1992 |

EPO FORM P0460

Pour tout renseignement concernant cette annexe : voir Journal Officiel de l'Office européen des brevets, No.12/82